(19)

**Europäisches Patentamt**

**European Patent Office**

**Office européen des brevets**

(11) **EP 1 160 336 A1**

(12) **EUROPEAN PATENT APPLICATION**

(43) Date of publication:
**05.12.2001 Bulletin 2001/49**

(51) Int Cl.⁷: **C21B 11/02**, C21B 13/00

(21) Application number: **01112887.3**

(22) Date of filing: **01.06.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **02.06.2000 JP 2000166593**

(71) Applicant: **KABUSHIKI KAISHA KOBE SEIKO SHO**
**Kobe-Shi, Hyogo-ken 651-0072 (JP)**

(72) Inventors:
  • **Nagata, Kazuhiro**
    **Yokohama-shi, Kanagawa 224-0006 (JP)**
  • **Kobayashi, Isao**
    **Chuo-ku, Osaka-shi, Osaka 541-0051 (JP)**

  • **Negami, Takuya**
    **Shinagawa-ku, Tokyo 141-8688 (JP)**
  • **Uragami, Akira**
    **Shinagawa-ku, Tokyo 141-8688 (JP)**
  • **Tanigaki, Yasuhiro**
    **Chuo-ku, Osaka-shi, Osaka 541-0051 (JP)**
  • **Tokuda, Koji**
    **Chuo-ku, Osaka-shi, Osaka 541-0051 (JP)**
  • **Kikuchi, Shoichi**
    **Chuo-ku, Osaka-shi, Osaka 541-0051 (JP)**

(74) Representative: **Müller-Boré & Partner**
**Patentanwälte**
**Grafinger Strasse 2**
**81671 München (DE)**

(54) **Method of and apparatus for manufacturing metallic iron**

(57)     A method of manufacturing reduced iron at high Fe purity efficiently with less intrusion of a slag components using less carbonaceous reducing agent and fuel, comprising charging a compact of the iron oxide containing a carbonaceous reducing agent in a packed bed, reducing the iron oxide to 90% or more while keeping in a solid state by a heat source formed from the lower portion of the furnace and then melting the same, as well as an apparatus for manufacturing the metallic iron, comprising a fire grate disposed in the inside of a packed bed, a compact charged layer on the fire grate, a charging product charging mechanism for supplying the compact and a mechanism for discharging an exhaust gas in the furnace, and a fuel charging mechanism, a fuel combustion space and a molten product stores bath disposed below the fire grate.

FIG. 1

EP 1 160 336 A1

**Description**

This invention concerns a technique of heating iron oxide containing materials such as iron ores together with carbonaceous reducing agents such as carbon materials and reducing and melting them to obtain metallic iron and, more specifically, it relates to a method of and an apparatus for manufacturing the metallic iron at high purity by separating a slag components intruded as a gangue mineral in iron oxide sources by using a packed bed.

As a direct reduction method of directly reducing the iron oxides such as iron ores or iron oxide pellets by a carbon source such as a carbon material or a reducing gas, a packed bed method represented by a Midrex process has been known so far. The direct reduction method of this type is a method of blowing a reducing gas reformed, for example, from natural gases through bustle ports charging mechanism at a lower portion of a packed bed and reducing iron oxides by utilizing the reducing potential thereof to obtain the metallic iron. Further, a method of manufacturing reduced iron by using carbon materials such as coals as the reducing agent instead of natural gases has been noted recently and, concretely, an SL/RN process has already been put to practical use.

However, since the reduced iron obtained by the conventional reduced iron production method includes a great amount of slag components such as $SiO_2$, $Al_2O_3$ and CaO contained in the iron oxide used as the raw material (gangue elements in iron ores) or carbon material (ash in coals), there are a problem that the purity of the metallic iron (iron quality) is lowered.

While the slag components can be separated and removed by the following refining step, the increase in the amount of slags not only lowers the yield of the refined molten iron but also gives undesired effects on the operation cost of the electric arc furnace, so that reduced iron of high quality and with less content of the slag has been demanded. However, iron ores of high iron quality have to be used as the raw material for the manufacture of reduced iron in the existent reduced iron manufacturing method, which greatly narrows the range for the selection of practical iron making materials.

Further, it is a final purpose to obtain reduced solid products as intermediate products in the existent method as described above and this requires additional steps of transportation, storage, briquetting or cooling till they are sent to the following step of refining, to result in problems that large energy loss is caused or the energy and the special apparatus are required for briquetting.

On the other hand, as a method of obtaining metallic iron by reducing the iron oxides directly, a smelt reduction method such as a DIOS process has also been known. This is a method of reducing iron oxides previously by about 30 to 50% and then reducing them to metallic iron by reducing them directly with carbon in a molten iron bath . However, since this method requires two steps of preliminary reduction and final reduction in the molten iron bath, it involves a problem not only of troublesome operations but also of remarkable loss of refractories since the molten iron oxides (FeO) present in the molten bath are in direct contact with refractories.

Further, the present applicant has previously disclosed a method of heating, reducing and melting a powder mixture containing iron oxide powder and a carbonaceous reducing agent in a state of laying the mixture on a movable hearth to obtain metallic iron (Japanese International Patent Publication No. WO99/20801). However, although the metallic iron at high purity can be obtained in this method, it requires a large scale facility and it is difficult to save spacing for the facility.

This invention has been accomplished in view of the prior art described above and intends to provide a method and an apparatus capable of efficiently forming reduced iron at high Fe purity with less intrusion of a slag components by using less amount of a carbonaceous reducing agent and a fuel.

A manufacturing method according to this invention capable of overcoming the subject described above provides a method of manufacturing metallic iron by reducing a raw material at least comprising a carbonaceous reducing agent and a iron oxide containing material, wherein the raw material is charged into a packed bed, burning the fuel in the lower portion of the packed bed, the compact disposed at an upper portion is heated by generated combustion heat and iron oxide in the iron oxide containing material is reduced by heating and then melted, and wherein the iron oxide in the iron oxide-containing material is reduced by heating to 90% or more and then melted.

Further, it is preferred to incorporate the carbonaceous reducing agent by an equivalent amount or more for the reducing reaction of the compact, or to increase the concentration of the carbonaceous reducing agent on the surface of the compact or to provide the surface of the compact with a coating layer comprising a carbonaceous reducing agent, for example, a fine powdery coal, since this can prevent re-oxidation of the iron oxide after reduction. With an identical purpose, it is also effective that a material inert to the oxidative gas is present on the surface of the compact. Furthermore, a flux may be incorporated into the compact for adjusting the melting temperature in order to promote the separation of slags formed during reduction by heating or melting.

Further, the method of this invention can be applied to the production of iron alloys, metallic manganese, metallic nickel, metallic chromium or alloys thereof by replacing the iron oxides contained in the compact of the iron oxide containing the carbonaceous reducing agent and the gangue components entirely or partially with a combination of one or more of manganese oxides, nickel oxides and chromium oxides.

Further, according to the method of this invention, the compact may be reduced and melted by charging the compact above the fire grate disposed in the inside of a furnace used as the packed bed, and burning the fuel below the fire grate or providing a layerd bed comprising refractory material or a lumpy carbonaceous material having open cells when a layered bed may be disposed on the fire grate. Further, it is desirable to supply an oxygen-containing gas from a gas supply port above the fire grate to burn the gases generated from the compact in order to increase the heat efficiency by the effect of utilizing the reducing gas. It is also preferred to mix an auxiliary fuel to the oxygen-containing gas. Further, it is also effective to supply an auxiliary fuel toward the space below the fire grate in order to enhance the effect according to this invention.

The apparatus according to this invention is suitable to the practice of the method described above, and it comprises a fire grate disposed in the inside of a packed bed, a charging section for a compact at least comprising a carbonaceous reducing agent and an iron oxide containing material, and a mechanism for supplying a compact and a mechanism for exhausting exhaust gases in the furnace above the fire grate, and a fuel combustion space and a molten material store space provided below the fire grate.

In this apparatus, it is preferred that a fuel supply port is disposed toward the fuel combustion space and a molten material discharge port is disposed toward the molten material store space described above.

Further, it is also recommended to provide a refractory layer having open cells on the fire grate and a refractory charging mechanism may be disposed to the refractory layer.

Further, it is preferred to provide an upper combustion space above the fire grate for burning gases generated from the compact, and an oxygen-containing gas supply port may be disposed toward the combustion space. Further, it is also effective in this invention to provide a carbon material injection device toward the molten material store space.

The present inventors have made earnest studies for dissolving the foregoing subject and have found that reduced iron at high Fe purity with less inclusion of the slag components can be produced by using less amount of the carbonaceous reducing agent and less fuel consumption, and loss of refractories can be suppressed, by charging a compact at least comprising a carbonaceous reducing agent and an iron oxide containing material (hereinafter sometimes referred to simply as "compact") in a packed bed, burning the fuel sufficiently below the fire grate, heating and reducing of the iron oxide contained in the compact to more than 90% while keeping the compact in a solid state, and then melting the same.

The manufacturing method and apparatus of this invention are to be explained more specifically with reference to the drawings illustrating an example of the apparatus for producing the metallic iron according to this invention but the invention is not restricted to the illustrated embodiment at all and the invention can be practiced while appropriately changing the design within a range conforming the gist of this invention described above or to be described later, which are also included within the technical scope of this invention.

    Fig. 1 illustrates a preferred embodiment of a packed bed according to this invention;
Fig. 2 is a graph showing an atmosphere in the furnace and the state of a compact in a case of reducing and melting the compact;
Fig. 3 is a graph showing the temperature and the reduction degree of iron oxide;
Fig. 4 is a graph showing a relation between the temperature of a compact and an oxygen partial pressure in the inside of the compact in a case of changing the atmospheric temperature; and
Fig. 5 is a graph showing a relation between the temperature of the compact and the oxygen partial pressure in the inside of the compact in a case of changing the size of the compact.

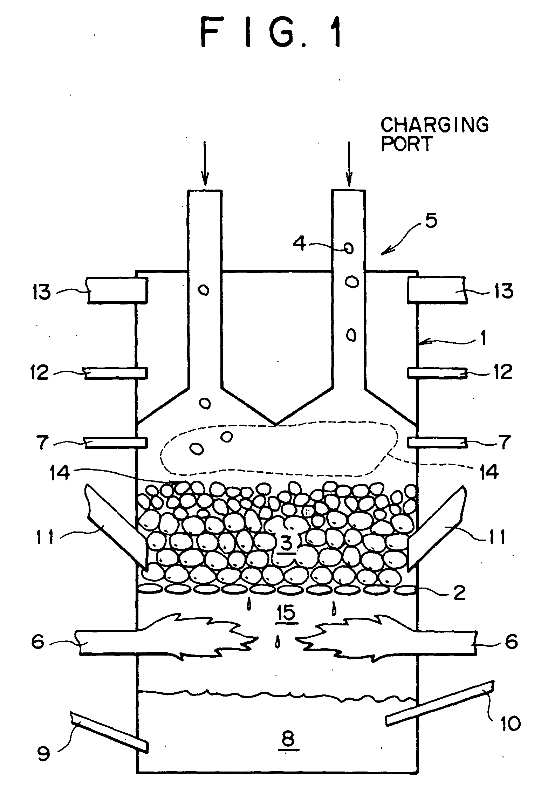

Fig. 1 is a schematic view illustrating a preferred embodiment of an apparatus for producing metallic iron according to this invention.

In this invention, the term "compact at least comprising a carbonaceous reducing agent and an iron oxide containing material" means a compact material formed by mixing at least a carbonaceous reducing agent and a powdery granule of the iron oxide and forming them into an optional shape such as granule, pellet, briquette, lump and bar by optionally using an appropriate binder.

Further, for improving the heating and reduction efficiency of the iron oxide, it is also effective to apply compression of tightly compacting inter-particle gaps in the compact, thereby lowering the porosity at the surface of the compact to increase heat conductivity.

The carbonaceous reducing agent used in this invention may include, with no particular restriction, coal powder formed by merely applying a treatment such as pulverization and sieving after excavation, pulverized coke subjected to a heat treatment such as dry distillation or petroleum coke and they may be, for example, blast furnace dusts recovered as carbonaceous containing wastes. For proceeding the heating and reducing reaction efficiently, it is recommended to select the material of high carbon content and small particle size.

Further, the iron oxide containing material may include iron ores ground after excavation, sieved and then delivered; dusts discharged from metallurgical reaction plants such as blast furnace, basic oxygen converter, electric arc furnace, packed bed, fluidized bed and cupola; iron oxide containing materials removed or discharged from pelletizing plant or sinter plant as off spec products and mill scales discharged from product manufacturing steps such as hot strip mill, cold strip mill, which are materials that can be recovered as the metallic iron after reduction and melting.

Further, as will be described later, since the surface of the compact is occasionally re-oxidized at the final stage of reduction for the iron oxide, a material inert to oxidative gases such as a liquid suspension of CaO, MgO, $SiO_2$, $CaF_2$ or cement may previously be coated or incorporated to the surface of the compact and/or the blending amount of the carbon material may be adjusted so as to satisfy the amount equal with or more than the theoretical amount required for the reduction of the iron oxide, preferably, "amount required for the reduction of the raw material iron oxide + amount required for carburization of reduced iron + loss of oxidation due to the atmospheric gas (also including the amount for controlling atmosphere)", thereby increasing the carbon concentration, by which a CO gas can be generated even after the completion of the reduction to keep reducing the atmosphere near the surface of the compact after reduction. Alternatively, a compact capable of forming and growing a metallic shell on the surface of the compact by heating and reduction and can be reduced till the iron oxide is no more present substantially inside the metallic shell, and various methods can be used for preventing re-oxidation.

As a method of preventing re-oxidation, it is also preferred to cover the surface of the compact with a carbonaceous reducing agent, for example, a carbon source such as tar, soot and fine coal powder. In this case, coating can be applied by covering tar, soot or fine powder coal, or blowing a carbonaceous source by spraying or the like after mixing in water. Further, a plurality of methods described above may be conducted simultaneously as a method for preventing re-oxidation.

In this invention, as shown in the drawing, a fire grate (2) is disposed in the inside of a furnace body (1) of a packed bed, and a compact (4) is charged continuously or intermittently into the furnace from one or more compact charging mechanisms (5) disposed in the upper portion of the furnace body (1) on the side above the fire grate (2).

In this invention, explanation is to be made for the compact used for forming the metallic shell but any of the compacts of the iron oxide including the carbonaceous reducing agent and the gangue components described above may be applied.

The fire grate (2) may be, for example, a water-cooled grate (rooster), a refractory grate and a structure made of fire resistant ceramic bricks, with no particular restriction, so long as they are heat resistant grate either of a water cooling type or a non-water cooling type since the furnace can be operated at a lower temperature by using the method according to this invention compared with the existent production process.

Fuel is burnt below the fire grate (2) (hereinafter referred to as lower portion of the furnace) and the iron oxide disposed thereon is heated and reduced by the heat generated by the fuel combustion. In this invention, reduction of the iron oxide is not proceeded by a reducing gas (CO) by the combustion of coke or the like, thereby reacting oxygen contained in the iron oxide and CO in a reducing atmosphere as in the conventional manufacturing process, but by thoroughly burning the fuel into $CO_2$ to form heat required for reduction and melting, heating the compact in a non-reducing atmosphere ($CO_2$) and reducing the iron oxide by the carbonaceous reducing agent contained in the compact.

That is, when the compact as described above is used, reduction at first proceeds from the surface of the compact in the initial stage of heating and reducing of the iron oxide, the reduced metallic iron is diffused and sintered on the surface of the compact to form a metallic shell on the surface of the compact. Then, reduction of the iron oxide proceeds efficiently under the reducing effect of the carbonaceous reducing agent in the shell and, further, under the reducing effect of CO formed by the reaction between the carbonaceous reducing agent and the iron oxide in the shell is rapidly reduced till the iron oxide is no more present substantially in a short period of time, and the formed metallic iron is gradually grown to the inside of the shell. Further, since most of slags such as $SiO_2$ and CaO by-produced being derived from the gangue mineral contained in the iron oxide such as iron ores or being derived from ashes contained in the carbonaceous reducing agent are aggregated in cavities formed in the metallic shell under growing and adhering to each other, there is no problem that a great amount of the iron oxide is mixed together in the slag upon separation of the slag and the metallic iron, which was a problem in the conventional iron making process. Further, since the iron oxide is reduced while being kept in a solid state in the compact and then melted subsequently, it is substantially free from the problem that the not-reduced iron oxide such as FeO is intruded into the molten material to cause damage of refractories by the iron oxide.

While the metallic shell can be melted under heating by elevating the heating temperature further after the completion of the reducing reaction, the metallic shell can be melted finally by lowering the melting point along with they progress of carburization even by merely continuing heating as it is at the reducing temperature since the metallic iron is carburized by a reducing atmosphere in the inside of the metallic shell at the final stage of reduction and the melting point lowers in accordance with the thermodynamic equilibrium.

As described above according to this invention, reduction of the iron oxide proceeds in the inside of the compact by utilizing the heat of combustion and the carbonaceous reducing agent contained in the compact under non-reducing atmosphere ($CO_2$). However, when the heating temperature goes higher than the melting point of the metallic shell before completion of reduction, since the metallic shell is melted and the compact is fused to each other, the metallic shell is not formed and the subsequent reducing reaction does not proceed efficiently. That is, since heating the compact becomes not uniform along with increase in the amount of melt and the reducing efficiency for the iron oxide is lowered, it is preferred that the highest heating temperature in the reducing stage is controlled to a temperature lower than the melting point of the metallic iron and higher than the melting point of the slag.

When the highest heating temperature is higher than the melting temperature of the formed slag, the slag by-produced with heating and reduction is melted to proceed fusion of the slag to each other and diffusion and sintering between the metallic iron is also promoted to advance growing of the metallic shell and separation of the slag. For lowering the melting point of the slag to lower than the melting point of the metallic iron, it is desirable, for example, to add a flux externally and/or internally to control such that the melting temperature of the formed slags is lower than the melting point of the metallic shell. The flux described above can include, for example, CaO, MgO, $SiO_2$ and CaF.

In a case where the temperature of the molten material such as the molten iron and slag is near the melting point thereof, such molten material has no sufficient fluidity and the dripping rate is slow, so that heat of combustion can not be transfered uniformly by the molten material to sometimes cause over-heated portion and insufficiently heated portion in the compact during the reduction process. Further, the compact may possibly be melted in the over-heated portions and the fusion further disturbs transfer of combustion heat to lower the reducing efficiency of the compact.

For preventing melting of the compact as described above and securing permeability of the apparatus (reactor) thereby promoting heat transfer to improve the fluidity of the molten material, it is recommended, for example, to interpose a refractory layer (3) having open cells on the fire grate (2). When the refractory layer (3) is heated by the heat of combustion from the lower portion of the furnace and kept at high temperature, since the supplied compact is in contact with or approaches the refractories, and is heated rapidly up to a temperature region required for the reduction of the iron oxide, the reduction starts early and the reduction of the iron oxide can be completed till the temperature in the furnace reaches a melting start temperature for the metallic shell. Further, since the refractories are heated and kept a high temperature, the molten material such as the metallic iron is further heated by the refractory layer (3) during the dripping step and fluidity is improved, the dripping speed is increased and transfer of combustion heat is not interfered.

The refractories used as the refractory layer (3) in this invention have no particular restriction in view of the kind and the shape so long as they are less reactive with the molten material such as the metallic iron or slag and high temperature combustion gas ($CO_2$) from below and, for example, ceramic materials such as aluminum or mullite can be used. Among them, alumina is preferred. Further, it may suffice that they have open cells capable of transfering the heat of combustion when they are supplied and form the layer, and lumpy refractory materials are, particularly, preferred as such shape.

Instead of ceramics, a lumpy carbon material compact may be used. The material can include coal, coke or their pulverizates in the compact form. In the case of the lumpy carbon material compact layer, it can be used also as a heat source for keeping the reduced and molten metallic iron in a molten state.

Further, since the refractories may be consumed by melting during operation, it may be supplied together with the compact through the compact charging mechanism (5), or it may be supplied by one or more refractory charging mechanisms (11) from the wall surface of the furnace body to the refractory material layer as illustrated in the drawing.

The amount of the refractory material supplied into the furnace and the thickness of the refractory layer laid on the fire grate may be properly determined while taking the constitution, the scale and the heating efficiency of individual manufacturing apparatus into consideration. For rapidly heating the compact to be placed thereon and rapidly heating to proceed the reduction/melting efficiently, the thickness is preferably such that the retention time from the charging of the compacts to the dripping from the grate after melting is about from 5 to 60 min, more preferably, about from 5 to 20 min.

It is recommended that one or more of fuel supply ports (6) are disposed in a fuel combustion space below the fire grate (2), being directed to the fuel combustion space such that fuel and oxygen or an oxygen containing gas such as air are supplied from the supply port (6) to burn the fuel sufficiently till it is formed into $CO_2$ and make the inside of the furnace to a non-reducing atmosphere.

When the $CO_2$ formed in this step reacts with the carbon source, since it forms CO and, simultaneously, causes heat absorption, it is desirable to burn the fuel completely such that no carbon source remains in the fuel combustion space (15). The heat of combustion generated by combustion ($CO_2$) passes through the fire grate (2) and the refractory layer (3) and forms a heat source necessary for drying, reduction and melting of the compacts.

The fuel supplied from the fuel supply port (6) has no particular restriction and any of fine powdery coal, natural gas or heavy oil can be used for instance. Further, it is desirable to supply an oxygen-containing gas such as air together with the fuel.

As described above, while the iron oxide is reduced by the heat of combustion and the carbonaceous reducing agent and CO and $CO_2$ are formed in the inside of the metallic shell as described above, a portion of $CO_2$ reacts with the carbon source in the shell before flow out (hereinafter sometimes referred to as "solution loss reaction") at more than 1000°C. Since the reaction is an endothermic reaction, temperature elevation of the compact is suppressed and the inside of the metallic shell is highly reducing due to formation of CO ($CO_2$ + C → 2CO) in which the reduction of the metallic iron proceeds rapidly inside the metallic shell without melting of the shell.

Further, since CO in the inside is discharged through the pores on the surface of the compact, CO concentration in the furnace is increased. In this case, when an oxygen-containing gas such as air or oxygen is supplied into the furnace to completely burn CO formed from the compact into $CO_2$, the heat of combustion can be utilized again as a heat source required for preliminary drying, heating and temperature elevation for the compact (4) during the descent that is charged newly from the compact charging mechanism (5), so that the iron oxide can be heated and reduced more efficiently with a less carbon source than usual. Further, also in a case of using a carbon material including a volatile matter such as coal as the carbonaceous reducing agent, the volatile matter can be re-used by combustion as the heat source.

The position for the addition of the oxygen-containing gas added to the furnace has no particular restriction so long as it is located above the fire grate. It is preferred to dispose one or more oxygen-containing gas supply ports (7) at optional positions of the furnace body (1) and it is preferred that they are disposed such that the blowing positions is located above the charged compact. It is recommended that the oxygen-containing gas is added by disposing the oxygen-containing gas supply ports (7), particularly, in the upper portion and/or in the middle portion of the furnace, being directed to the upper combustion space (14) above the charged compact.

During the progress of reduction for the iron oxide in the inside of the compact, since CO is released through the pores in the compact to keep the reducing atmosphere on the surface of the compact, the metallic shell is less re-oxidized even in the $CO_2$ atmosphere in the furnace. However, since discharge of CO is decreased at the final stage of reduction, the metallic shell may sometimes be re-oxidized by $CO_2$. When the re-oxidized metallic shell is melted, the refractory material may possibly be melted and erroded by the molten iron oxide, so that it may adopt a method, for example, of increasing the carbon concentration on the surface of the compact as described above in order to prevent such re-oxidation.

In the process of heating and reduction for the compact, liquid slag containing the iron oxide mainly comprising FeO is scarcely formed (hereinafter simply referred to as "liquid material") so long as the endothermic amount due to the solution loss reaction and the reducing reaction of the iron oxide is balanced with the amount of heat conduction from the outside to the compact. When the amount of heat conduction increases to more than the endothermic amount, the temperature of the compact is elevated to form the liquid material.

Further, the gas supply ports may be disposed in a plurality of stages along the direction of the height of the furnace and, further, it is preferred to mix an auxiliary fuel to the oxygen-containing gas in order to keep the temperature near the compact.

Since such liquid material, penetrates the grain boundaries of the iron oxide to promote the reducing reaction if it is in a small amount, the endothermic amount along with the reducing reaction increases to suppress the temperature elevation of the compact and formation of a great amount of the liquid material in the course of the reduction can be suppressed. However, when reduction is carried out at a high temperature of 1300°C or higher, the amount of heat conduction becomes excessive compared with the endothermic amount and the temperature of the compact is elevated to form a great amount of the liquid material before completion of reduction to close the pores in the compact, so that CO and $CO_2$ formed in the inside of the compact are less discharged through the pores to hinder the reducing reaction. Further, the liquid material exudes through the pores to cause a smelting reduction phenomenon of the iron oxide and the exuded liquid material may sometimes damage the refractories or the fire grate, so that it is desirable to conduct heating and reduction so as not to form the liquid material in the course of reduction. However, the liquid material may be formed in an appropriate amount to promote the reducing reaction. Formation of the liquid material can be suppressed by the method, for example, of analyzing the gangue components contained in the iron oxide such as iron ores to be used and conducting reduction at a temperature lower than the temperature at which the liquid material is to be formed, or compounding a carbon source in an amount more than the stoichiometric amount for the reducing reaction to the compact. Alternatively, a flux may be added externally and/or internally to the compact to control the melting temperature of the formed slag as described above.

As has been described above, according to the method of this invention, the iron oxide can be reduced to 90% or more while keeping the compact in a solid state by the endothermic effect caused along with the progress of reduction and then melted. Further, when the iron oxide is melted after being reduced to 90% or more, the amount of the iron oxide that remains not yet reduced in the molten material can be decreased to prevent damages to the refractories caused by the molten iron oxide or the phenomenon of smelting reduction and the temperature is preferably controlled such that the iron oxide is melted after being reduced to 96% or more and, further preferably, 98% or more.

The operation temperature upon heating and reduction has no particular restriction so long as it is lower than the temperature at which the metallic iron or carburized product thereof formed by reduction can be melted and a temperature within a range from 1300 to 1500°C, more preferably, 1350 to 1450°C is recommended in order to efficiently proceed heating and reduction while suppressing the formation of the liquid material.

The temperature in the furnace is elevated to a high temperature by the heat of combustion from the lower portion of the furnace and by the combustion of gases formed in the furnace by the oxygen-containing gas in the upper combustion space (14) (hereinafter also referred to as "heat of secondary combustion"). Since the compact charging mechanism (5) disposed at the top of the furnace may sometimes be damaged if the temperature near the top of the furnace is excessively high, it is desirable to control the temperature near the top of the furnace to such a temperature region where even a mechanism of a not water cooled structure can operate and where the charging equipment at the top of the furnace is not damaged, preferably, 1000°C or lower, more preferably, 800°C or less, by blowing cold air or steams from the furnace top cooling mechanism (12).

The gas in the furnace is discharged from one or more exhaust gas discharging mechanisms (13) disposed at optional positions of the top of the furnace. In a case where an oxygen gas or an oxygen-containing gas such as air is added to the furnace, since CO formed in the furnace is completely burnt into $CO_2$, most of gases discharged is $CO_2$, but CO may be discharged without combustion and the discharged gas may be supplied and re-utilized as a fuel from the fuel support port (6) disposed at the lower portion of the furnace.

Molten products such as metallic iron and slag are accumulated while passing (dripping) through the refractory layer (3) and the fire grate (2) into a molten product store space (8) at the bottom of the furnace. The metallic iron and slag accumulated in the store space are separated by the difference of the specific gravity, and the slag can be recovered from a slag take out port (not illustrated) disposed on the side of the surface layer, while the metallic iron at high purity can be recovered from a molten product discharge port (9) disposed in the lower portion continuously or intermittently.

When carbon is added by the provision of a carbon material injection device (10) so as to blow the carbon material in the molten product store space (8) in the lower portion of the furnace, the carbon concentration in the accumulated metallic iron can be controlled and molten FeO remained in the slag can be reduced to improve the recovery yield of the metallic iron.

The carbon material to be injected has no particular restriction so long as it is a carbonaceous material and it may be coals or organic resin.

The kind and the shape of the injection lance usable in this invention have no particular restriction, which may be refractory lance or a consumable lance such as made of iron.

The method of manufacturing metallic iron from the compact of the iron oxide containing the carbonaceous reducing agent by using the packed bed type furnace has been explained, but iron alloy, metallic manganese, metallic nickel, metallic chromium or alloys thereof can be manufactured when the invention is applied to the manufacturing method as described above for the compact in which the iron oxide is partially or entirely substituted with one or more of manganese oxide, nickel oxide and chromium oxide.

This invention is to be explained more specifically by way of examples but the invention is no way restricted to the following examples and can be appropriately modified within a range conforming the gist of the invention described above or to be described later, which is to be included within the technical scope of the invention.

Example 1

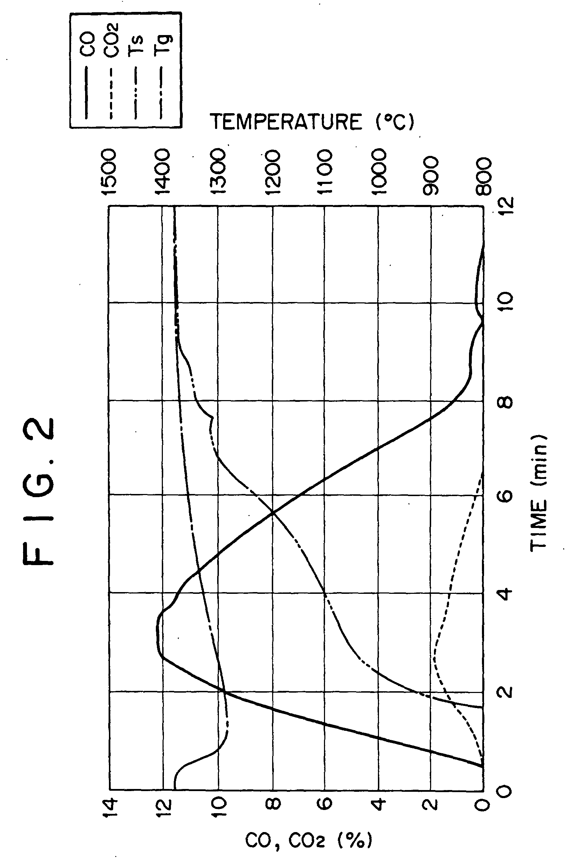

The following experiment was conducted by using a packed bed shown in Fig. 1. A water cooled fire grate (2) as a water-cooled rooster is disposed in a furnace body (1) of 60 cm inner diameter x 2 m height, refractories comprising alumina (average particle size: 15 mm) were charged on the fire grate through a refractory charging mechanism (11) and, subsequently, the refractories are appropriately supplemented to keep the thickness of the refractory layer to 20 cm and heated by the heat of combustion formed in the lower portion of the furnace. Iron ore powder, coal powder and binder (each of 75 μm or less in average grain size) of the following chemical composition, which were uniformly mixed at the following ratio and then formed into pellets (spheres), were supplied on the refractories through a compact charging mechanism (5) (charged height: 5 - 40 cm). A fuel (natural gas) mixed with air was introduced in a fuel combustion space below the fire grate (2) through a fuel supply port (6) and burnt completely into $CO_2$. Further, air was blown through a oxygen-containing gas supply port (7) disposed in the upper portion of the furnace to burn CO released along with reduction of the iron oxide contained in the compact. The molten iron and slag are stored in a molten product store space (8) and, after accumulation by a predetermined amount, the molten iron was taken out of a molten product discharge port (9). Further, a carbon source such as fine coal powder was blown for the addition of carbon into the molten product store space through a carbon material injection device (10). Further, an exhaust gas was exhausted through an exhaust gas discharge mechanism (13) disposed at the top of the furnace and steams were blown through a furnace top cooling mechanism (12) to control the temperature at the top of the furnace to 650°C or lower. Example 1 shows change of concentration in the exhaust gases just after charging spherical pellets by a predetermined amount into the furnace heated at the internal temperature of 1400°C. The concentrations of CO and $CO_2$ formed upon reduction and melting of the compact were measured by an continuously recording meter. Fig. 2 shows the infra-red gas analyzer charge of the temperature of the compact and the atmospheric gas composition when the compact was reduced and melted.

It can be seen from Fig. 2 that $CO_2$ and CO were formed just after the starting of the experiment and vigorous reducing reaction proceeded. Further, as shown in Fig. 2, the CO concentration in the furnace showed a peak about three minutes after the start of the experiment and reduction was completed and melting was started about 7.5 minutes after the starting and the compact was melted and dripped 9 minutes after the start of the experiment.

Powder Mixture

Iron ores powder: 76.1% (mass%)
chemical composition: total amount of Iron Fe = 69.4%,
FeO = 30.1 %, $Al_2O_3$ = 0.49%,
$SiO_2$ = 1.75%, CaO = 0.49%
Coal powder : 21.9%
proximate analysis: ash 8.8%, volatile matter 19.6%,
fixed carbon 71.6%

In the graph, are shown pellet temperature Ts, pellet upper part temperature Tg, concentrations CO and $CO_2$ for CO and $CO_2$ in exhaust gases, respectively.

Example 2

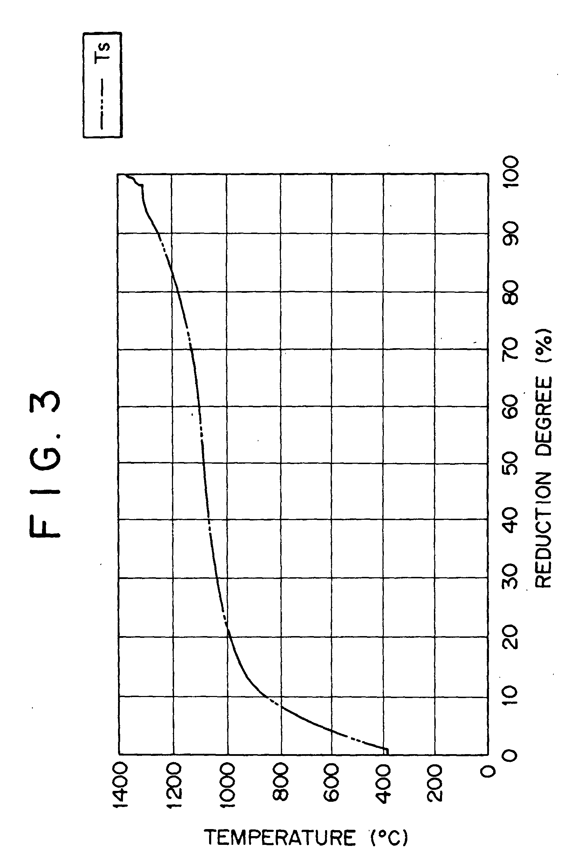

Fig. 3 shows the relation between the reduction degree of the compact and the temperature of the compact in Example 1. It can be seen from Fig. 3 that the temperature of the compact is from 1000°C to 1200°C for the reduction degree of the iron oxide of about from 20% to 85%. In view of the above, it can be seen that even when heat of combustion at high temperature is supplied to the compact, this is consumed by the endothermic reaction, and the temperature of the compact is kept constant and the reaction scheme shown below is established.

$$Fe_2O_3 + 3CO = 2Fe + 3CO_2$$

$$\underline{CO_2 + C = 2CO}$$

In the graph, are shown the temperature Ts for the compact and the reduction degree RD for the compact.

Example 3

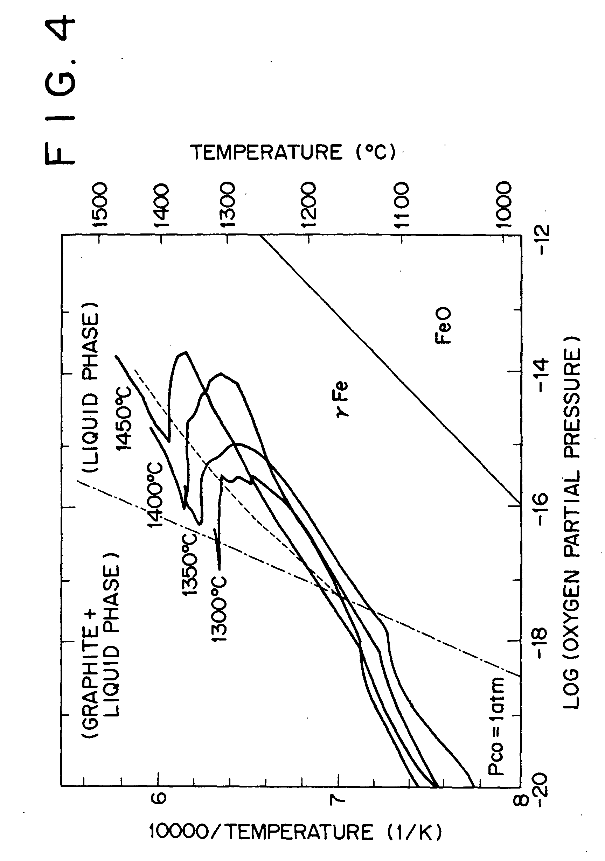

An experiment was conducted in the same manner as in Example 1 except for changing the atmospheric temperature in the furnace (operation temperature) for 1300°C, 1350°C, 1400°C and 1450°C and behavior of the compact was measured. In this experiment, oxygen potential in the compact of 20 to 25 mm diameter was measured by using a needle type oxygen sensor. Fig. 4 shows for a relationship between the temperature and the oxygen potential in the compact on a Fe-O phase diagram.

As can be seen from Fig. 4, the compact was melted and dripped when the atmospheric temperature in the furnace was 1350°C or higher but the compact was not melted and dripped when the atmospheric temperature in the furnace was at 1300°C. It can be seen that the compact was melted and dripped when the measured curve remained within the liquid phase existent region (L).

Example 4

An experiment was conducted in the same manner as in Example 3 except for using a compact controlled such that the size (diameter) of the compact is within a range of: A (20 - 25 mm) and B (17 - 19 mm) and changing the atmospheric temperature in the furnace as 1300°C and 1400°C. The oxygen partial pressure in the compact was measured by using the needle type oxygen sensor identical with that in Example 3.

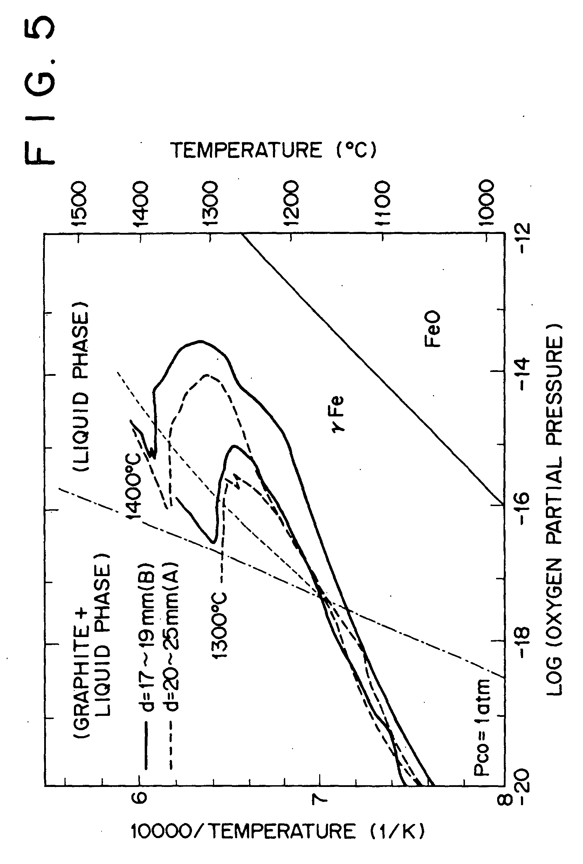

Fig. 5 shows a relation between the size of the compact and the oxygen partial pressure in the compact.

As shown by the solid line B, the measured curve shifted upper leftwardly as the size of the compact was decreased. The compact was not melted down at 1300°C when the size was larger (A) but it was melted and dripped even at 1300°C when the size of the compact was smaller (B) and it can be seen that the temperature elevation rate of the compact increased by decreasing the size of the compact and the relation between the oxygen potential in the compact and the possible melting region changed to lower the melting temperature, that is, operation temperature could be lowered.

As described above according to this invention, since cokes and sintered ore are not required and the fuel can be burnt completely, the fuel efficiency is high and reduced iron of high Fe purity can be manufactured efficiently with decreased amount of the carbonaceous reducing agent and the fuel and with less intrusion of the slag components, as well as the scale of the facility can be reduced. Further, reduced iron of high Fe purity can be obtained in a shorter time, at a lower temperature and with higher efficiency than usual by heating and reducing and melting the compact of the iron oxide and carbonaceous reducing agent as it is or after being compacted further by using a packed bed. Particularly, according to this invention, reduction and melting proceed rapidly even at a low temperature of 1300°C and the metallic iron can be obtained in a short period of time. Further, the metallic iron of high Fe purity can be obtained with decreased consumption amount of the carbon material and the fuel and, further, the scale of the facility can be decreased.

**Claims**

1. A manufacturing method by reducing a starting material comprising at least a carbonaceous reducing agent and an iron oxide containing material wherein the method comprises charging the starting material into a packed bed, burning a fuel in a lower portion of the packed bed to heat a compact disposed in an upper portion thereof by the heat of combustion formed, heat-reducing the metallic iron in the iron oxide containing material and then melting the same.

2. A manufacturing method as defined in claim 1, wherein the iron oxide in the iron oxide containing material is heated and reduced to 90% of reduction degree or more and then melted.

3. A manufacturing method as defined in claim 1 or 2, wherein a carbonaceous reducing agent is incorporated by more than the stoichiometric amount for reducing reaction in the compact and then charged in the packed bed.

4. A manufacturing method as defined in any one of claims 1 to 3, wherein the concentration of the carbonaceous reducing agent on the surface of the compact is increased and then the compact is charged into the packed bed.

5. A manufacturing method as defined in any one of claims 1 to 4, wherein a carbon source is covered on the surface of the compact and then the compact is charged into the packed bed.

6. A manufacturing method as defined in any one of claims 1 to 6, wherein a material inert to an oxidative gas is present on the surface of the compact.

7. A manufacturing method as defined in any one of claims 1 to 6, wherein a flux is incorporated into the compact to control the melting temperature of a slag formed upon heating and reduction or melting.

8. A manufacturing method as defined in any one of claims 1 to 7, wherein a furnace provided at the inside thereof with a fire grate is used as the packed bed and the compact is charged on the fire grate and a fuel is burnt below the fire grate.

9. A manufacturing method as defined in claim 8, wherein a bed layer having open cells is disposed on the fire grate.

10. A manufacturing method as defined in claim 9, wherein the bed layer comprises a lumpy carbon material layer.

11. A manufacturing method as defined in claim 9, wherein the bed layer comprises a refractory layer.

12. A manufacturing method as defined in any one of claims 8 to 11, wherein at least one gas supply port is disposed above the fire grate along the direction of the height of the packed bed and an oxygen-containing gas is supplied through the gas supply port.

13. A manufacturing method as defined in claim 12, wherein the gas formed upon heating and reduction of the compact is burnt by the supply of the oxygen-containing gas.

14. A manufacturing method as defined in claim 12 or 13, wherein an auxiliary fuel is mixed with the oxygen-containing gas.

15. A manufacturing method as defined in any one of claims 8 to 14, wherein an auxiliary fuel is supplied toward the space below the fire grate.

16. A manufacturing method as defined in claim 14 or 15, wherein the auxiliary fuel is a carbon containing material.

17. A manufacturing method as defined in any one of claims 1 to 16, wherein the metallic iron, metallic manganese, metallic nickel, metallic chromium or an alloy thereof is manufactured by using a compact in which the starting material is substituted with one or more of the iron oxide, manganese oxide, nickel oxide and chromium oxide.

18. An apparatus for manufacturing the metallic iron comprising a packed bed having a grate in the inside thereof, a charging portion for a compact comprising at least a carbonaceous reducing agent and an iron oxide containing material, a compact charging mechanism and a mechanism for discharging an exhaust gas in the furnace disposed above the fire grate, and a fuel combustion space and a molten product store space below the fire grate.

19. A manufacturing apparatus as defined in claim 18, wherein a fuel supply port is disposed toward the fuel combustion space and a molten product discharge port is disposed to the molten product store space.

20. A manufacturing apparatus as defined in claim 18 or 19, wherein a bed layer having open cells is provided on the fire grate.

**21.** A manufacturing apparatus as defined in any one of claims 18 to 20, wherein an upper combustion space for burning a gas formed from the compact is disposed above the fire grate.

**22.** A manufacturing apparatus as defined in any one of claims 18 to 21, wherein an oxygen-containing gas supply port is disposed toward the upper combustion space.

**23.** A manufacturing apparatus as defined in any one of claims 20 to 22, wherein a bed material charging mechanism is disposed toward the bed layer.

# F I G. 1

# F I G . 2

EP 1 160 336 A1

# FIG. 3

F I G. 4

F I G. 5

| | European Patent Office | EUROPEAN SEARCH REPORT | Application Number EP 01 11 2887 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 41 39 236 A (MANNESMANN) 27 May 1993 (1993-05-27) <br><br> * claims 1-10; figure 1 * <br> --- | 1,2,8,9, 11-13, 18-23 | C21B11/02 C21B13/00 |
| A | US 3 702 182 A (HUMPHREY JAMES LEYSHON) 7 November 1972 (1972-11-07) * column 2, line 40 – column 4, line 22; figures 1,2 * <br> --- | 1,2,10, 18,19,23 | |
| A | FR 2 347 442 A (GAZ DE FRANCE) 4 November 1977 (1977-11-04) <br><br> * page 4; claims 1,5; figure 1 * <br> --- | 1,8-11, 15,16, 18-20,23 | |
| A | US 5 782 957 A (FRANKLIN G. RINKER) 21 July 1998 (1998-07-21) * claim 1 * <br> --- | 3 | |
| A | GB 916 680 A (UNION CARBIDE CORPORATION) 23 January 1963 (1963-01-23) * claims 1-4 * <br> --- | 3-7,17 | TECHNICAL FIELDS SEARCHED (Int.Cl.7) <br><br> C21B |
| A | US 4 504 043 A (HIDEYUKI YAMAOKA) 12 March 1985 (1985-03-12) <br> ----- | | |

The present search report has been drawn up for all claims

| Place of search | Date of completion of the search | Examiner |
|---|---|---|
| THE HAGUE | 22 August 2001 | Elsen, D |

**ANNEX TO THE EUROPEAN SEARCH REPORT
ON EUROPEAN PATENT APPLICATION NO.**          EP 01 11 2887

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2001

| Patent document cited in search report | | Publication date | Patent family member(s) | | Publication date |
|---|---|---|---|---|---|
| DE 4139236 | A | 27-05-1993 | BR | 9204519 A | 01-06-1993 |
| | | | ZA | 9208474 A | 06-05-1993 |
| US 3702182 | A | 07-11-1972 | CA | 924906 A | 24-04-1973 |
| | | | DE | 2101784 A | 16-09-1971 |
| | | | FR | 2077286 A | 22-10-1971 |
| | | | GB | 1326241 A | 08-08-1973 |
| | | | NL | 7100556 A | 27-07-1971 |
| | | | ZA | 7008545 A | 29-12-1971 |
| FR 2347442 | A | 04-11-1977 | NONE | | |
| US 5782957 | A | 21-07-1998 | US | 5601631 A | 11-02-1997 |
| | | | US | 6270551 B | 07-08-2001 |
| | | | US | 5873925 A | 23-02-1999 |
| | | | AU | 704030 B | 15-04-1999 |
| | | | AU | 5375796 A | 19-03-1997 |
| | | | BR | 9610117 A | 29-06-1999 |
| | | | CA | 2230489 A | 06-03-1997 |
| | | | JP | 11511511 T | 05-10-1999 |
| | | | WO | 9708347 A | 06-03-1997 |
| | | | US | 5865875 A | 02-02-1999 |
| GB 916680 | A | 23-01-1963 | NONE | | |
| US 4504043 | A | 12-03-1985 | JP | 58171515 A | 08-10-1983 |
| | | | JP | 1375829 C | 22-04-1987 |
| | | | JP | 57205487 A | 16-12-1982 |
| | | | JP | 61040280 B | 08-09-1986 |
| | | | JP | 1242651 C | 14-12-1984 |
| | | | JP | 57210905 A | 24-12-1982 |
| | | | JP | 59018443 B | 27-04-1984 |
| | | | JP | 58113307 A | 06-07-1983 |
| | | | AU | 537688 B | 05-07-1984 |
| | | | AU | 8302282 A | 06-01-1983 |
| | | | CA | 1193867 A | 24-09-1985 |
| | | | DE | 3216019 A | 27-01-1983 |
| | | | FR | 2507624 A | 17-12-1982 |
| | | | GB | 2100755 A,B | 06-01-1983 |
| | | | SE | 457265 B | 12-12-1988 |
| | | | SE | 8202585 A | 11-12-1982 |
| | | | US | 4564389 A | 14-01-1986 |
| | | | KR | 8600735 B | 14-06-1986 |
| | | | ZA | 8202895 A | 30-03-1983 |

EPO FORM P0459

For more details about this annex : see Official Journal of the European Patent Office, No. 12/82